# EUROPEAN PATENT SPECIFICATION

(11) **EP 1 987 389 B1**
(45) Date of publication and mention of the grant of the patent: **14.06.2017**
(21) Application number: 07751588.0
(22) Date of filing: 22.02.2007
(51) Int. Cl.: G02B 27/14, G01N 15/14

(54) **OPTICAL SYSTEM FOR A FLOW CYTOMETER**
OPTISCHES SYSTEM FÜR EIN FLUSS-ZYTOMETER
SYSTÈME OPTIQUE POUR CYTOMÈTRE EN FLUX

(30) Priority: 22.02.2006 US 776125 P
(43) Date of publication of application: 05.11.2008
(73) Proprietor: Accuri Instruments Inc., Ann Arbor, MI 48103 (US)
(72) Inventor: RICH, Collin, A., Ypsilanti, MI 48197 (US); FISHER, Richard, L., Ann Arbor, MI 48103 (US); BAIR, Nathaniel, C., Ann Arbor, MI 48104 (US)
(74) Representative: Vossius & Partner Patentanwälte Rechtsanwälte mbB
(86) International application number: PCT/US2007/004836
(87) International publication number: WO 2007/100723

(56) References cited:
- EP-A2- 1 396 736
- US-A- 4 293 221
- US-A- 4 933 813
- US-A- 5 028 127
- US-A- 5 139 609
- US-A1- 2003 048 539
- US-A1- 2005 057 749
- US-A1- 2005 163 663
- US-A1- 2006 002 634

## Description

This invention relates generally to the flow cytometer field, and more specifically to a new and useful optical system in the flow cytometry field.

### BACKGROUND

The conventional optical system for flow cytometers includes a collecting lens to collect light from the interrogation zone, beam splitters to split the light into different channels based on wavelength, and several detector subsystems with filters to pass only particular wavelengths (such as 515-545 nm, 564-606 nm, and 653-669 nm).

To use the conventional optical system, the beam splitters and filters must be arranged in a very particular order (monotonically increasing or degreasing order). For example, a first beam splitter must split between the two lower frequency bands, a first detector subsystem must filter between the lowest frequency band, a second beam splitter must split between the two higher frequency bands, a second detector subsystem must filter between the middle frequency bands, and a third detector subsystem must filter between the highest frequency bands. To change the wavelength detection of the conventional optical system (for example, to replace the frequency band that is originally the highest with a frequency band that is now the lowest) would require the re-arrangement of the entire optical system (including swapping both filters and beam splitters). In other words, with a conventional optical system, the step of filtering the light of the first channel affects the light of the second channel.

Thus, the user must skillfully arrange the filters in a particular order or the detector subsystems will not function correctly. This limitation prevents the easy swapability of the filters and the easy modification of detection parameters. Further, the particular arrangement of the optical table decreases the reliability and the ruggedness of the flow cytometer since the alignment of the beam splitters affects the detection of each of the detector subsystems.

Thus, there is a need in the flow cytometer field to create a new and useful optical system. This invention provides such new and useful optical system.

Examples of various prior flow cytometer system with optical systems including multiple lenses and filters are described in US 2006/0002634, EP 1396736 and US 4933813. These arrangements can however be improved in particular to allow easier set up and modification of detection parameters.

US 4,293,221 discloses flow systems for photometric analysis of particles, such as biological cells, particularly for obtaining multidmensional slit-scan type contours, as well as other images. In one broad approach, fluorochrome-stained cells in suspension flow through a focused slit of laser excitation light defining a planar excitation region in the X-Y plane. As each fluorochrome-stained cell flows through the excitation region, fluorescence emissions are generated at the intersection of the excitation region and the cell. To generate a slit-scan type contour along the Z axis, fluorescence emissions are monitored as the cell flows through the excitation region and a plurality of substantially planar parallel cross-sections of the cell along the Z axis are excited to fluorescence. To generate slit-scan type contrours along the cellular X and Y axes, various optical system embodiments define various combinations of cellular linear portions within the Z axis cross-section. The fluorescence or other emissions from these cellular linear portions are then combined by integrating to generate the desired contours. In another broad approach described, a three-dimensional volume of a cell in flow is illuminated with exciting radiation which is not a narrow beam. Three optical systems view a central point in the flow system. The optical systems are slit-imaging and have three respective axes orthogonal to each other and symmetrically located about the stream such that the axis of flow forms equal angles with each optical axis. A photomultiplier tube for each optical system detects the imaged cell fluorescence.

According to the present invention there is therefore provided a flow cytometer as described in the accompanying claims.

### BRIEF DESCRIPTION OF THE FIGURES

FIGURE 1 is a schematic representation of the first preferred embodiment of the invention.
FIGURES 2 and 3 are detailed top and side views, respectively, of a collecting lens of a variation of the first preferred embodiment of the invention.
FIGURE 4 is a schematic representation of a second preferred embodiment of the invention.

### DESCRIPTION OF THE PREFERRED EMBODIMENTS

The following description of the preferred embodiments of the invention is not intended to limit the invention to these preferred embodiments, but rather to enable any person skilled in the art to make and use this invention.

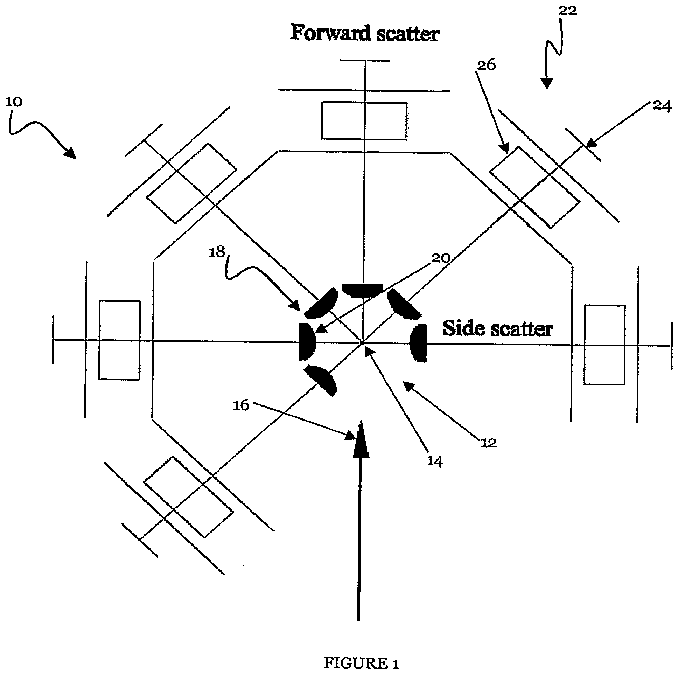

As shown in FIGURE 1, the optical system 10 of the preferred embodiments of the invention is preferably integrated into a flow cytometer. In this preferred environment, the flow cytometer defines a flow channel 14 with an interrogation zone 12 and includes an illumination source 16 that impinges the interrogation zone 12 from a particular direction. The optical system 10 preferably includes a lens system 18 with multiple lens surfaces 20 arranged around the interrogation zone 12, and a detection system 22 with multiple detectors 24 arranged to detect the light collected and collimated by the lens system 18. The multiple detectors 24 are each coupled to a local filter 26 that independently filters the collected light for specific wavelengths. Although the optical system 10 of the preferred embodiment has been specifically designed for an interrogation zone 12 of a flow cytometer, the system may alternatively be used in any suitable system to collect light from a point along multiple paths.

The lens system 18 of the first preferred embodiment functions to collect and collimate the scattered and/or emitted light from the interrogation zone 12. The lens system 18 includes five or more lens surfaces 20 (one forward, two side scatter, and two or more florescence). In the preferred embodiment, the lens system 18 is composed of separate leases. In an alternative embodiment, the lens system 18 may be formed as a unitary piece with multiple facets. The lens system 18 is preferably arranged along a plane parallel to the light source and perpendicular to the flow channel 14, but may alternatively be arranged in any suitable manner.

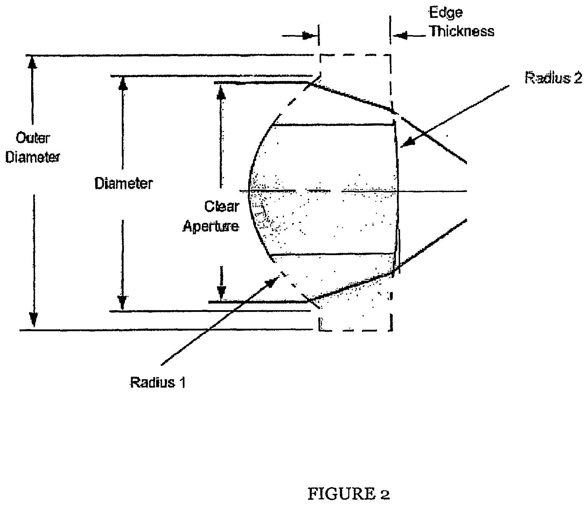

The lens system 18 may include at least five whole lenses (preferably a 011-0330 spherical lens sourced from Optosigma of Santa Ana, California), The whole lenses preferably include a usable numerical aperture of approximately 0.31. In a variation, as shown in FIGURE 2, the lens system 18 includes truncated lenses (preferably a 46-347 aspherical lens sourced from Edmund Optics of Barrington, New Jersey). In other variations, the lenses may be whole or truncated, may be spherical or aspherical, and may be similar or dissimilar to each other.

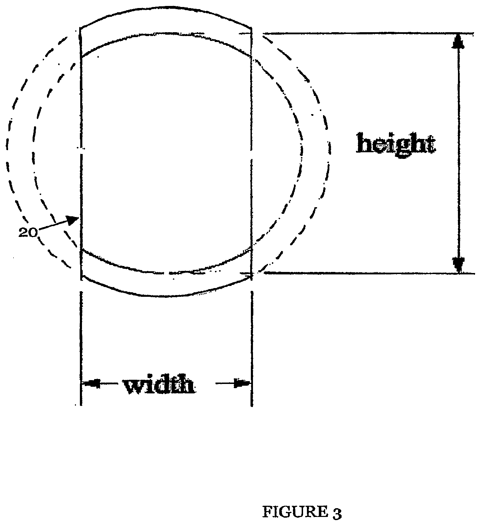

The truncation of the lenses functions to increase the light collecting ability of the lens system 18, while maintaining a close proximity to the interrogation zone. There is a limit to the maximum size of the lens's numerical aperture due to the geometrical arrangement of the lenses around the interrogation zone 12. By truncating the lenses, they may be located the same distance from the interrogation zone 12 as a spherical lens, while having an increased height and therefore, an increased numerical aperture. With an increased light collecting ability (or increased numerical aperture of the lens surface), the system will be able to provide a brighter image and allow for the visualization of finer details. Preferably, the lenses are truncated to remove the edge of the lens. More preferably, as shown in FIGURES 2 and 3, the lenses are truncated approximately 35% in the horizontal direction to remove both the edge and a portion of the lens within the clear aperture diameter. The lenses may, however, may be truncated by any suitable amount to increase the light collecting ability of the lens system 18, while maintaining a close proximity to the interrogation zone. The width of the lens is the dimension in the plane of FIGURE 1. The numerical aperture of the lens can be increased by increasing the height of the lens. The power collection efficiency of the lens increases proportionally with the increase in height. The truncated aspherical lenses preferably include a usable numerical aperture of approximately 0.49.

The lens surfaces 20 may include coatings that function to convert the lens surfaces 20 to wavelength specific filters. The coatings may include various inorganic or organic compounds such that the compounds absorb specific wavelengths of light while transmitting other wavelengths. Each lens preferably has a different coating, such that it will filter a specific wavelength that is different from the wavelengths filtered by the other lens surfaces 20. Alternatively at least two lens surfaces 20 may have the same coating. The coated lens surfaces 20 may work cooperatively with the local filters 26 coupled to the detectors 24 that filter specific wavelengths, or may independently filter specific wavelengths.

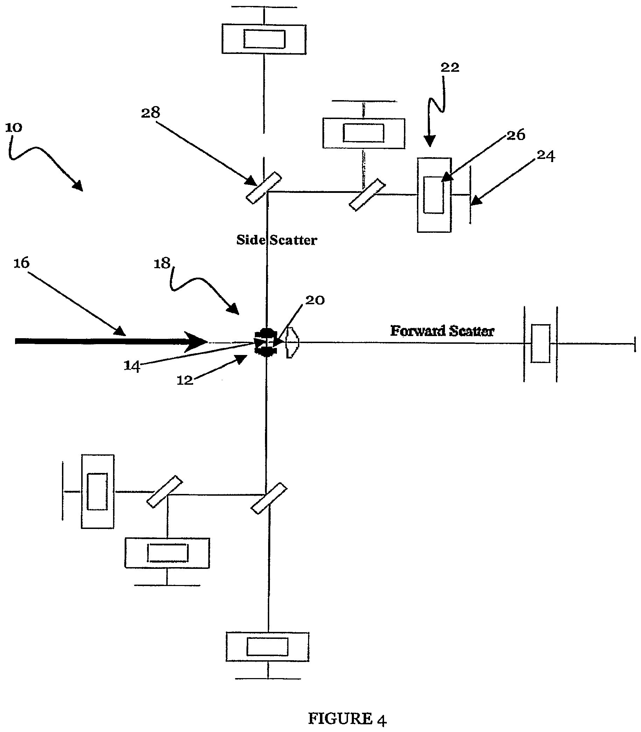

The detector system of the first preferred embodiment functions to detect light from the lens system 18. The detector system preferably includes multiple detectors 24. The detectors are preferably a photomultiplier tube ("PMT") or a photodiode, but may alternatively include any suitable device, such as a camera, to detect light or other electromagnetic energy. In the first preferred embodiment, the detector system includes a detector 24 for every lens surface 20 of the lens system 18. The detectors 24 are preferably arranged in a direct path from the lens surfaces 20, and the light collected and directed by the lens system 18 is preferably guided to the detectors 24 by an appropriate light path. The light path is preferably an air channel for simplicity, but may alternatively be a fiber optic cable or any other appropriate waveguide. According to an example shown in FIGURE 4, the detector system includes more detectors 24 than lens surfaces 20 of the lens system 18. In this embodiment, the lens system 18 also includes conventional optic devices, such as beam splitters 28, to branch the collected and directed light to the detector system. In this embodiment, the beam splitters 28 are preferably nonselective with regard to wavelength, which preserves the freedom to independently filter for specific wavelengths (by using local filters 26) at each of the various detectors 24.

The detectors 24 are each coupled to a local filter 26 that independently filters for specific wavelengths. The local filter 26 is preferably easily accessed by the user, such that the user may swap in different filter and change the wavelength detection of the detector system. The step of filtering the light of the first channel preferably does not affect the light of the second channel of the detector system. Thus, the user may easily swap the filters in any order to achieve the same detection parameters. Further, since the each of the detectors is independently aligned with the local filter and the lens surface, the optic system experiences increased reliability and the ruggedness over conventional flow cytometers.

As a person skilled in the art will recognize from the previous detailed description and from the figures and claims, modifications and changes can be made to the preferred embodiments. The invention is defined in the following claims.

## Claims

1. A flow cytometer system with an optical system comprising
a flow channel (14) with an interrogation zone (12);
an illumination source (16) that impinges the flow channel (14) in the interrogation zone (12) from a particular direction; and
an optical system (10) including
a lens system (18) with multiple lens surfaces (20) arranged around the interrogation zone (12) along a plane perpendicular to the flow channel, and each lens surface is arranged to collect and collimate light from the interrogation zone (12); and
a detection system (22) with multiple detectors (24) adapted to detect light from the lens system (18), wherein each detector (24) includes a corresponding local filter (26);
**characterized in that**:
the lens system (18) includes at least five lens surfaces (20) arranged around the interrogation zone (12) including a forward scatter lens surface, two side scatter lens surfaces, and at least two fluorescence lens surfaces, wherein the lens system (18) includes a unitary piece with multiple facets defining the lens surfaces (20); and **in that**
each local filter (26) independently filters for specific wavelengths, such that light filtered by a local filter for a first detector (24) does not affect light detected by a second detector (24).

2. The system of Claim 1 wherein at least one of the multiple lenses is spherically curved.

3. The system of Claim 2 wherein the spherical lens has a usable numerical aperture value between 0.25 and 0.35.

4. The system of any preceding Claim wherein the lens surfaces include a coating adapted to convert the lens surface to a wavelength specific filter.

5. The system of any preceding Claim wherein the detector system (22) includes a detector (24) for each lens surface (20) of the lens system (18); and wherein the light collected and collimated by the lens surfaces (20) is guided in a direct path to the detectors (24).

6. The system of Claim 5 wherein the light collected and collimated by the lens surfaces (20) is guided in an unbranched path to the detectors (24).

7. The system of any of Claims 1 to 6 wherein the detector system (22) includes multiple detectors (24) for each lens surface (20) of the lens system (18), further including at least one beam splitter (28) that branches the collected and collimated light from the lens surface (20) to the multiple detectors (24), and wherein the beam splitter (28) is nonselective with respect to wavelength.

8. The system of any of Claims 1 to 7, wherein each of the detectors (24) is independently aligned with its corresponding local filter (26) and lens surface (20).

## Patentansprüche

1. Fluss-Zytometersystem mit einem optischen System, das aufweist:
einen Flusskanal (14) mit einer Abfragezone (12);
eine Beleuchtungsquelle (16), die aus einer bestimmten Richtung in der Abfragezone (12) auf den Flusskanal (14) trifft; und
ein optisches System (10), das umfasst:
ein Linsensystem (18) mit mehreren Linsenoberflächen (20), die entlang einer Ebene senkrecht zu dem Flusskanal um die Abfragezone (12) herum angeordnet sind, und wobei jede Linsenoberfläche eingerichtet ist, um Licht von der Abfragezone (12) zu sammeln und parallel zu richten; und
ein Detektionssystem (22) mit mehreren Detektoren (24), die geeignet sind, Licht von dem Linsensystem (18) zu detektieren, wobei jeder Detektor (24) ein entsprechendes lokales Filter (26) umfasst;
**dadurch gekennzeichnet, dass**
das Linsensystem (18) wenigstens fünf Linsenoberflächen (20) umfasst, die um die Abfragezone (12) herum angeordnet sind, die eine Vorwärtsstreulinsenoberfläche, zwei Seitenstreulinsenoberflächen und wenigstens zwei Fluoreszenzlinsenoberflächen umfassen, wobei das Linsensystem (18) ein einheitliches Stück mit mehreren Facetten umfasst, welche die Linsenoberfläche (20) definieren; und dadurch, dass
jedes lokale Filter (26) unabhängig nach spezifischen Wellenlängen filtert, so dass Licht, das von einem lokalen Filter für einen ersten Detektor (24) gefiltert wird, Licht, das von einem zweiten Detektor (24) gefiltert wird, nicht beeinflusst.

2. System nach Anspruch 1, wobei wenigstens eine der mehreren Linsen sphärisch gekrümmt ist.

3. System nach Anspruch 2, wobei die sphärische Linse einen nutzbaren numerischen Blendenwert zwischen 0,25 und 0,35 hat.

4. System nach einem der vorhergehenden Ansprüche, wobei die Linsenoberflächen eine Beschichtung umfassen, die geeignet ist, die Linsenoberfläche in ein wellenlängenspezifisches Filter umzuwandeln.

5. System nach einem der vorhergehenden Ansprüche, wobei das Detektorsystem (22) einen Detektor (24) für jede Linsenoberfläche (20) des Linsensystems (18) umfasst; und wobei das von den Linsenoberflächen (20) gesammelte und parallel gerichtete Licht in einem direkten Weg zu den Detektoren (24) geleitet wird.

6. System nach Anspruch 5, wobei das von den Linsenoberflächen (20) gesammelte und parallel gerichtete Licht in einem unverzweigten Weg zu den Detektoren (24) geleitet wird.

7. System nach einem der Ansprüche 1 bis 6,
wobei das Detektorsystem (22) mehrere Detektoren (24) für jede Linsenoberfläche (20) des Linsensystems (18) umfasst, wobei es ferner wenigstens einen Strahlteiler (28) umfasst, der das von der Linsenoberfläche (20) gesammelte und parallel gerichtete Licht zu den mehreren Detektoren (24) leitet, und wobei der Strahlteiler (28) in Bezug auf die Wellenlänge nicht selektiv ist.

8. System nach einem der Ansprüche 1 bis 7, wobei jeder der Detektoren (24) unabhängig mit seinem entsprechenden lokalen Filter (26) und der Linsenoberfläche (20) ausgerichtet ist.

## Revendications

1. Système de cytomètre en flux avec un système optique comprenant un canal d'écoulement (14) avec une zone d'interrogation (12) ;
une source d'éclairage (16) qui frappe le canal d'écoulement (14) dans la zone d'interrogation (12) depuis une direction particulière ; et
un système optique (10) comportant
un système de lentilles (18) avec de multiples surfaces de lentille (20) agencées autour de la zone d'interrogation (12) le long d'un plan perpendiculaire au canal d'écoulement, et chaque surface de lentille est conçue pour collecter et collimater de la lumière provenant de la zone d'interrogation (12) ; et
un système de détection (22) avec de multiples détecteurs (24) adaptés pour détecter de la lumière provenant du système de lentilles (18), dans lequel chaque détecteur (24) comporte un filtre local correspondant (26) ;
**caractérisé en ce que** :
le système de lentilles (18) comporte au moins cinq surfaces de lentille (20) agencées autour de la zone d'interrogation (12) comportant une surface de lentille à diffusion vers l'avant, deux surfaces de lentille à diffusion latérale, et au moins deux surfaces de lentille à fluorescence, dans lequel le système de lentilles (18) comporte une pièce unitaire avec de multiples facettes définissant les surfaces de lentille (20) ; et **en ce que**
chaque filtre local (26) filtre indépendamment pour des longueurs d'ondes spécifiques, de telle sorte que de la lumière filtrée par un filtre local pour un premier détecteur (24) n'affecte pas de la lumière détectée par un second détecteur (24).

2. Système selon la revendication 1, dans lequel au moins une des multiples lentilles est incurvée de manière sphérique.

3. Système selon la revendication 2, dans lequel la lentille sphérique a une valeur d'ouverture numérique utilisable entre 0,25 et 0,35.

4. Système selon une quelconque revendication précédente, dans lequel les surfaces de lentille comportent un revêtement adapté pour convertir la surface de lentille en un filtre spécifique de longueur d'onde.

5. Système selon une quelconque revendication précédente, dans lequel le système détecteur (22) comporte un détecteur (24) pour chaque surface de lentille (20) du système de lentilles (18) ; et dans lequel la lumière collectée et collimatée par les surfaces de lentille (20) est guidée dans un trajet direct vers les détecteurs (24).

6. Système selon la revendication 5, dans lequel la lumière collectée et collimatée par les surfaces de lentille (20) est guidée dans un trajet non ramifié vers les détecteurs (24).

7. Système selon l'une quelconque des revendications 1 à 6, dans lequel le système détecteur (22) comporte de multiples détecteurs (24) pour chaque surface de lentille (20) du système de lentilles (18), comportant en outre au moins un séparateur de faisceau (28) qui ramifie la lumière collectée et collimatée de la surface de lentille (20) vers les multiples détecteurs (24), et dans lequel le séparateur de faisceau (28) est non sélectif par rapport à une longueur d'onde.

8. Système selon l'une quelconque des revendications 1 à 7, dans lequel chacun des détecteurs (24) est aligné indépendamment sur ses filtre local (26) et surface de lentille (20) correspondants.
